# EUROPÄISCHE PATENTANMELDUNG

(11) **EP 4 015 473 A1**
(43) Veröffentlichungstag der Anmeldung: **22.06.2022**
(21) Anmeldenummer: 20214427.5
(22) Anmeldetag: 16.12.2020
(51) Int. Cl.: C03B 37/012, C03B 23/207, G02B 6/02

(54) **ANTIRESONANZELEMENTVORFORMLING ZUR HERSTELLUNG EINER ANTIRESONANTEN HOHLKERNFASER**

(71) Anmelder: Heraeus Quarzglas GmbH & Co. KG, 63450 Hanau (DE)
(72) Erfinder: ROSENBERGER, Manuel, 63450 Hanau (DE); PLASS, Jaqueline, 63450 Hanau (DE); SCHUSTER, Kay, 06803 Bitterfeld-Wolfen (DE)
(74) Vertreter: Heraeus IP

(57) **Zusammenfassung**

Die Erfindung betrifft einen Antiresonanzelementvorformling zur Herstellung einer antiresonanten Hohlkernfaser, in einer axialen Aufsicht umfassend
ein kreisförmiges erstes Kreiselement mit einem ersten Kreisradius und ein kreisbogenförmiges erstes Kreisbogenelement mit einem ersten Kreisbogenradius.
Die Erfindung betrifft weiterhin ein Verfahren zur Herstellung eines Antiresonanzelementvorformlings, eine Vorform zur Herstellung einer antiresonanten Hohlkernfaser umfassend zumindest einen Antiresonanzelementvorformling und eine antiresonante Hohlkernfaser.

Erfindungsgemäß ist vorgesehen, dass das erste Kreiselement und das erste Kreisbogenelement an zwei Kontaktstellen miteinander verbunden sind.

## Beschreibung

Die Erfindung betrifft einen Antiresonanzelementvorformling zur Herstellung einer antiresonanten Hohlkernfaser, in einer axialen Aufsicht umfassend ein kreisförmiges erstes Kreiselement mit einem ersten Kreisradius und ein kreisbogenförmiges erstes Kreisbogenelement mit einem ersten Kreisbogenradius.

Die Erfindung betrifft weiterhin ein Verfahren zur Herstellung eines Antiresonanzelementvorformlings, eine Vorform zur Herstellung einer antiresonanten Hohlkernfaser umfassend zumindest einen Antiresonanzelementvorformling und eine antiresonante Hohlkernfaser.

### Hintergrund der Erfindung

Herkömmliche Monomode-Lichtleitfasern aus Vollmaterial haben einen Kernbereich aus Glas, der von einem Mantelbereich aus Glas mit niedrigerem Brechungsindex umgeben ist. Die Lichtleitung beruht dabei auf Totalreflexion zwischen Kern- und Mantelbereich. Die Wechselwirkungen des geführten Lichtes mit dem Vollmaterial sind jedoch mit einer erhöhten Latenz bei der Datenübertragung und relativ niedrigen Schädigungsschwellen gegenüber energiereicher Strahlung verbunden.

Diese Nachteile vermeiden oder verringern "Hohlkernfasern", bei denen der Kern einen evakuierten, mit Gas oder Flüssigkeit gefüllten Hohlraum umfasst. In Hohlkernfasern ist die Wechselwirkung des Lichtes mit dem Glas geringer als in Vollkernfasern. Der Brechungsindex des Kerns ist kleiner als der des Mantels, so dass eine Lichtleitung durch Totalreflexion nicht möglich ist und das Licht normalerweise aus dem Kern in den Mantel entweichen würde. In Abhängigkeit vom physikalischen Mechanismus der Lichtleitung werden Hohlkernfasern unterteilt in "photonische Bandlückenfasern" und "antiresonante Hohlkernfasern".

Bei "photonischen Bandlückenfasern" ist der hohle Kernbereich von einem Mantel umgeben, in dem kleine Hohlkanäle periodisch angeordnet sind. Die periodische Struktur der Hohlkanäle im Mantel bewirkt den in Anlehnung an die Halbleitertechnologie als "photonische Bandlücke" bezeichneten Effekt, wonach an den Mantelstrukturen gestreutes Licht bestimmter Wellenlängenbereiche aufgrund von Braggreflexion im zentralen Hohlraum konstruktiv interferiert und sich nicht transversal im Mantel ausbreiten kann.

Bei der als "antiresonante Hohlkernfaser" ("antiresonant hollow-core fibers"; ARHCF) bezeichneten Ausführungsform der Hohlkernfaser ist der hohle Kernbereich von einem inneren Mantelbereich umgeben, in dem sogenannte "antiresonante Elemente" (oder "Antiresonanzelemente"; kurz: "AREs") angeordnet sind. Die um den Hohlkern gleichmäßig verteilten Wandungen der Antiresonanzelemente können als in Antiresonanz betriebene Fabry-Perot-Kavitäten wirken, die das auftreffende Licht reflektieren und durch den Faserkern leiten.

Diese Fasertechnologie verspricht eine niedrige optische Dämpfung, ein sehr breites Transmissionsspektrum (auch im UV- oder IR-Wellenlängenbereich) und eine geringe Latenz bei der Datenübertragung.

Potenzielle Anwendungen der Hohlkernfasern liegen auf dem Gebiet der Datenübertragung, der Hochleistungsstrahlführung, beispielsweise zur Materialbearbeitung, der Modalfilterung, der nichtlinearen Optik, insbesondere zur Superkontinuumserzeugung, vom ultravioletten bis infraroten Wellenlängenbereich.

### Stand der Technik

Ein Nachteil antiresonanter Hohlkernfasern liegt darin, dass Moden höherer Ordnung nicht zwangsläufig unterdrückt werden, so dass sie über große Übertragungslängen häufig nicht rein einmodig sind und sich die Qualität des Ausgangsstrahls verschlechtert.

Im Paper von Francesco Poletti "Nested antiresonant nodeless hollow core fiber"; Optics Express, Vol. 22, No. 20 (2014); DOI: 10.1364/OE 22.023807, wird ein Faserdesign vorgeschlagen, bei dem Antiresonanzelemente nicht als einfaches singuläres Strukturelement ausgebildet sind, sondern sich aus mehreren, miteinander verschachtelten (englisch: nested) Strukturelementen zusammensetzen. Die verschachtelten Antiresonanzelemente sind so ausgelegt, dass Kernmoden höherer Ordnung phasenangepasst an die Mantelmoden sind und unterdrückt werden, aber nicht die fundamentale Kernmode. Dadurch ist die Ausbreitung der fundamentalen Kernmode stets gewährleistet und die Hohlkernfaser kann über einen begrenzten Wellenlängenbereich effektiv einmodig gemacht werden.

Die effektive Modenunterdrückung hängt von der Mittenwellenlänge des übertragenen Lichts und von Strukturparametern des Faserdesigns ab, wie dem Radius des Hohlkerns und der Durchmesserdifferenz von verschachtelten Ringstrukturen in den Antiresonanzelementen.

Aus der EP 3 136 143 A1 ist eine antiresonante Hohlkernfaser bekannt (dort bezeichnet als "Hohlkernfaser ohne Bandlücke"), bei der der Kern neben der Fundamentalmode noch weitere Moden leiten kann. Zu diesem Zweck ist er von einem inneren Mantel mit "nicht-resonanten Elementen" umgeben, die eine Phasenanpassung von antiresonanten Moden mit den höheren Moden liefern. Die Herstellung der Hohlkernfaser erfolgt nach einer sogenannten "stack-anddraw-Technik", indem die Ausgangselemente zu einem achsenparallelen Ensemble angeordnet und zu einer Vorform fixiert werden, welche anschließend elongiert wird. Hierbei wird ein Hüllrohr mit hexagonalem Innenquerschnitt verwendet und in den Innenkanten des Hüllrohres werden sechs sogenannte "ARE-Vorformen" (Anti-Resonanz-Element-Vorformen) fixiert. Diese Vorform wird in zwei Stufen zu einer Hohlkernfaser ausgezogen.

Aus der WO 2015/185761 A1 ist eine antiresonante Hohlkernfaser bekannt, bei der innerhalb erster rohrförmiger "nicht-resonanter Elemente" weitere rohrförmige, sogenannte "verschachtelte Elemente" (dort bezeichnet als "nested elements") angeordnet sind, welche zusammen die Antiresonanzelemente ausbilden.

Ein Nachteil bei der Herstellung dieser Anordnung ist die relativ große Kontaktstelle, welche sich durch ein Verbindung eines "verschachtelten" Rohrs innerhalb der ersten nicht-resonanten Elementen ergibt, welche bereits bei geringer Abweichung von der Idealstruktur negative Auswirkungen auf die Effizienz der Lichtleitung der Faser nach sich zieht. Ein weiterer Nachteil ergibt sich in der geringen Variationsbreite zur Ausgestaltung der Antiresonanzelemente bei der ausschließlichen Verwendung rohrförmiger Elemente.

Aus der CN 111 474 627 A ist eine antiresonante Hohlkernfaser bekannt, bei der ein Antiresonanzelement in axialer Aufsicht aus einem Kreiselement und einem Kreisbogenelement ausgeformt ist. Kreiselement und Kreisbogenelement sind nicht miteinander, sondern jeweils direkt mit einem Mantel der Faser verbunden. Produktionstechnisch hat dies den Nachteil, dass eine Vorproduktion von Antiresonanzelementvorformlingen, welche in der final ausgezogenen Faser die Antiresonanzelemente ausbilden, nicht möglich ist, sondern alle Strukturelemente direkt mit einem Hüllrohr verbunden werden müssen. Dies sorgt für eine hohe Anfälligkeit bezüglich Abweichungen von der Idealanordnungen der Strukturelemente zueinander und somit zu einem Effizienzverlust bei der Lichtleitung.

Aus der US 2020/0241200 A1 ist eine antiresonante Hohlkernfaser bekannt, deren Antiresonanzelemente in einer axialen Aufsicht ein Kreiselement und ein gerade ausgeformtes Strukturelement ohne Krümmung umfassen. Ein Nachteil gerade ausgeformter Strukturelemente bei Antiresonanzelementen ist eine gegenüber gebogenen Strukturelementen verschlechterte Lichtführung, welche sich negativ auf die optischen Eigenschaften, wie beispielsweise die optische Dämpfung, der Faser auswirkt.

### Aufgaben

Eine Aufgabe der vorliegenden Erfindung ist es, einen oder mehrere der sich aus dem Stand der Technik ergebenden Nachteile zumindest teilweise zu überwinden.

Im Speziellen basiert die Erfindung auf dem Ziel, Antiresonanzelementvorformlinge zur Verfügung zu stellen, aus welchen leicht und reproduzierbar antiresonante Hohlkernfasern mit guten optischen Eigenschaften, beispielsweiser einer geringen optischen Dämpfung, herstellbar sind.

Ein weiteres Ziel der Erfindung ist es ein Verfahren zur Verfügung zu stellen, mit dem reproduzierbar Antiresonanzelementvorformlinge mit hoher Präzision und guten optischen Eigenschaften, wie beispielsweiser einer geringen optischen Dämpfung, herstellbar sind.

Ein weiteres Ziel der Erfindung ist es, ein Verfahren zur kostengünstigen Herstellung einer Vorform für eine Antiresonante-Hohlkernfaser anzugeben, dass Beschränkungen herkömmlicher Herstellungsverfahren vermeidet.

Ein weiteres Ziel der Erfindung ist es, Vorformen zur Herstellung antiresonanter Hohlkernfaser zur Verfügung zu stellen, die Beschränkungen herkömmlicher Vorformen vermeidet.

Ein weiteres Ziel der Erfindung ist es, antiresonante Hohlkernfaser zur Verfügung zu stellen, welche die Beschränkungen herkömmlicher Hohlkernfasern vermeidet.

### Bevorzugte Ausführungsformen der Erfindung

Ein Beitrag zur mindestens teilweisen Erfüllung mindestens einer der zuvor genannten Aufgaben wird durch die Merkmale der unabhängigen Ansprüche geleistet. Die abhängigen Ansprüche stellen bevorzugte Ausführungsformen bereit, die zur mindestens teilweisen Erfüllung mindestens einer der Aufgaben beitragen.
|1| Antiresonanzelementvorformling zur Herstellung einer antiresonanten Hohlkernfaser, in einer axialen Aufsicht umfassend
   ein kreisförmiges erstes Kreiselement mit einem ersten Kreisradius und ein kreisbogenförmiges erstes Kreisbogenelement mit einem ersten Kreisbogenradius,
   **dadurch gekennzeichnet, dass**
   das erste Kreiselement und das erste Kreisbogenelement an zwei Kontaktstellen miteinander verbunden sind.
|2| Antiresonanzelementvorformling nach Ausführungsform 1, **dadurch gekennzeichnet, dass das** erste Kreiselement und das erste Kreisbogenelement ein Glas, insbesondere Quarzglas, insbesondere ein Quarzglas mit einem Brechungsindex von mindestens 1,4, insbesondere 1,4 bis 3, insbesondere 1,4 bis 2,8, oder ein Polymer umfassen, insbesondere aus einem Glas, insbesondere aus Quarzglas, insbesondere aus Quarzglas mit einem Brechungsindex von mindestens 1,4, insbesondere 1,4 bis 3, insbesondere 1,4 bis 2,8, oder einem Polymer bestehen.
|3| Antiresonanzelementvorformling nach Ausführungsform 1 oder 2, **dadurch gekennzeichnet, dass** der Antiresonanzelementvorformling ein kreisförmiges zweites Kreiselement mit einem zweiten Kreisradius umfasst.
|4| Antiresonanzelementvorformling nach einer der vorhergehenden Ausführungsformen, **dadurch gekennzeichnet, dass** der Antiresonanzelementvorformling ein kreisbogenförmiges zweites Kreisbogenelement mit einem zweiten Kreisbogenradius umfasst.
|5| Antiresonanzelementvorformling nach einer der vorhergehenden Ausführungsformen, **dadurch gekennzeichnet, dass** der erste Kreisradius einen kleineren Betrag als der erste Kreisbogenradius aufweist.
|6| Antiresonanzelementvorformling nach einer der vorhergehenden Ausführungsformen, **dadurch gekennzeichnet, dass** das erste Kreisbogenelement innerhalb des ersten Kreiselements angeordnet ist.
|7| Antiresonanzelementvorformling nach einer der Ausführungsformen 1 bis 5, **dadurch gekennzeichnet, dass** das erste Kreisbogenelement außerhalb des ersten Kreiselements angeordnet ist.
|8| Verfahren zur Herstellung eines Antiresonanzelementvorformlings nach einer der Ausführungsformen 1 bis 7, **umfassend die Verfahrensschritte**
   (a) Bereitstellen eines in axialer Aufsicht kreisförmigen ersten Kreiselements mit einem ersten Kreisradius;
   (b) Bereitstellen eines in axialer Aufsicht kreisbogenförmigen ersten Kreisbogenelements mit einem ersten Kreisbogenradius;
   (c1) Anordnen des ersten Kreisbogenelements innerhalb des ersten Kreiselements, so dass ein erstes Kreisbogenende und ein zweites Kreisbogenende an einer Innenseite des ersten Kreiselements angeordnet sind; oder
   (c2) Anordnen des ersten Kreisbogenelements außerhalb des ersten Kreiselements, so dass ein erste Kreisbogenende und ein zweites Kreisbogenende an einer Außenseite des ersten Kreiselements angeordnet sind;
   (d) Verbinden des ersten Kreisbogenendes und des zweiten Kreisbogenendes mit den ersten Kreiselement unter Ausbildung zweiter Kontaktstellen.
|9| Verfahren nach Ausführungsform 8, **dadurch gekennzeichnet, dass** das Verbinden in Verfahrensschritt (d) durch einen Wärmeeintrag erfolgt.
|10| Vorform zur Herstellung einer antiresonanten Hohlkernfaser umfassend ein Hüllrohr, **dadurch gekennzeichnet, dass** in dem Hüllrohr zumindest ein Antiresonanzelementvorformling nach einer der Ausführungsformen 1 bis 7 angeordnet ist.
|11| Vorform zur Herstellung einer antiresonanten Hohlkernfaser nach Ausführungsform 10, **dadurch gekennzeichnet, dass** der zumindest eine Antiresonanzelementvorformling mit einer Innenfläche des Hüllrohrs verbunden ist.
|12| Vorform zur Herstellung einer antiresonanten Hohlkernfaser nach Ausführungsform 10 oder 11, **dadurch gekennzeichnet, dass** in dem Hüllrohr 3 bis 10 Antiresonanzelementvorformlinge angeordnet sind.
|13| Antiresonante Hohlkernfaser, in axialer Aufsicht umfassend einen Mantelbereich und zumindest ein in dem Mantelbereich angeordnetes Antiresonanzelement umfassend eine kreisförmige erste Kreisstruktur mit einem ersten Kreisstrukturradius und eine kreisbogenförmige erste Kreisbogenstruktur mit einem ersten Kreisbogenstrukturradius,
   **dadurch gekennzeichnet, dass**
   die erste Kreisstruktur und die erste Kreisbogenstruktur an zwei Kontaktstellen miteinander verbunden sind.
|14| Antiresonante Hohlkernfaser nach Anspruch 13 hergestellt durch Ausziehen einer Vorform nach einer der Ausführungsformen 10 bis 12.

### Allgemeines

In der vorliegenden Beschreibung beinhalten Bereichsangaben auch die als Grenzen genannten Werte. Eine Angabe der Art "im Bereich von X bis Y" in Bezug auf eine Größe A bedeutet folglich, dass A die Werte X, Y und Werte zwischen X und Y annehmen kann. Einseitig begrenzte Bereiche der Art "bis zu Y" für eine Größe A bedeuten entsprechend als Wert Y und kleiner als Y.

Einige der beschriebenen Merkmale sind mit dem Begriff "im Wesentlichen" verknüpft. Der Begriff "im Wesentlichen" ist so zu verstehen, dass unter realen Bedingungen und Fertigungstechniken eine mathematisch exakte Auslegung von Begrifflichkeiten wie "Überlagerung", "senkrecht", "Durchmesser" oder "Parallelität" nie exakt, sondern nur innerhalb gewisser fertigungstechnischer Fehlertoleranzen gegeben sein kann. Beispielsweise schließen "im Wesentlichen senkrechte Achsen" einen Winkel von 85 Grad bis 95 Grad zueinander ein und "im Wesentlichen gleiche Volumen" umfassen eine Abweichung von bis zu 5 Volumen-%. Eine "im Wesentlichen aus Kunststoff bestehende Vorrichtung" umfasst beispielsweise einen Kunststoffanteil von ≥95 bis ≤100 Gewichts-%. Eine "im Wesentlichen vollständige Befüllung eines Volumens B" umfasst beispielsweise eine Befüllung von ≥95 bis ≤100 Volumen-% des Gesamtvolumens von B.

### Ausführliche Beschreibung

Die Erfindung betrifft einen Antiresonanzelementvorformling zur Herstellung einer antiresonanten Hohlkernfaser, in einer axialen Aufsicht umfassend
ein kreisförmiges erstes Kreiselement mit einem ersten Kreisradius und ein kreisbogenförmiges erstes Kreisbogenelement mit einem ersten Kreisbogenradius.

Zur Überwindung der oben genannten Nachteile im Stand der Technik ist erfindungsgemäß vorgesehen, dass das erste Kreiselement und das erste Kreisbogenelement an zwei Kontaktstellen miteinander verbunden sind, wobei das Kreisbogenelement insbesondere mit einem ersten Kreisbogenende und einem dem ersten Kreisbogenende entgegengesetzten zweiten Kreisbogenende mit dem Kreiselement verbunden ist. Unter dem ersten Kreisbogenende und dem zweiten Kreisbogenende sind die in axialer Aufsicht auf den Antiresonanzelementvorformling sichtbaren Eckpunkte des ersten Kreisbogenelements zu verstehen, zwischen denen sich das erste Kreisbogenelement kreisbogenförmig erstreckt.

Ein derart aufgebauter Antiresonanzelementvorformling ist separat von weiteren Bauteilen zur Herstellung einer antiresonanten Hohlkernfaser herstellbar, was produktionstechnisch von Vorteil ist. Dadurch können Antiresonanzelementvorformlinge, die von der Idealstruktur, beispielsweise während deren Herstellung, abweichen relativ kostengünstig entsorgt werden, ohne dass weitere Bauteile zur Herstellung der antiresonanten Hohlkernfaser mitentsorgt werden müssen. Zudem kann durch eine Vorproduktion der Antiresonanzelementvorformlinge eine Uniformität über eine gesamte Produktionscharge erreicht werden, welche sich vorteilhaft auf die Symmetrie der mit den Antiresonanzelementvorformlingen hergestellte Vorformen und letztendlich auch antiresonante Hohlkernfasern auswirkt. Eine erhöhte Symmetrie wirkt sich positiv auf die optischen Eigenschaften der Hohlkernfaser aus.

Zudem haben sich aus derartigen Antiresonanzelementvorformlingen hergestellte Antiresonanzelemente in der finalen Hohlkernfaser als Bauteile mit verbesserten optischen Eigenschaften herausgestellt, was in einem geringen Lichtausbreitungsverlust (d. h. einschließlich Lichtstreuung, Biegung, Absorption und Einschluss) und somit in einer hohen Datenübertragungskapazität der finalen Hohlkernfaser resultiert.

Es hat sich herausgestellt, dass mit dem Kreiselement an zwei Kontaktstellen verbundene Kreisbogenelemente eine hohe Kontrolle der Strukturparameter des Antiresonanzelementvorformlings erlaubt und damit die Bereitstellung von antiresonanten Hohlkernfasern mit verbesserten optischen Eigenschaften ermöglicht.

Die verbesserten optischen Eigenschaften derartiger antiresonanter Hohlkernfasern zeigen sich beispielsweise in einer optischen Dämpfung von weniger als 0,15 dB/km bei Wellenlängen zwischen 1,0 µm bis 2,5 µm oder von weniger als 1 dB/km bei Wellenlängen von bis zu 0,8 µm. Als optische Dämpfung wird jegliche Art von Erscheinung bezeichnet, die eine Reduzierung der Stärke des ausgebreiteten Signals verursacht, ohne dabei einen Einfluss auf seine Form zu haben.

Als Antiresonanzelementvorformlinge werden Bauteile oder Bestandteile bezeichnet, die im Wesentlichen durch einfaches Langziehen (auch "Elongieren" genannt) beim Faserziehprozess zu Antiresonanzelementen in der Hohlkernfaser werden.

In einer axialen Aufsicht, das heißt in einer zweidimensionalen Betrachtung auf eine Längsachse, umfasst der Antiresonanzelementvorformling ein erstes Kreiselement, was in einer dreidimensionalen Betrachtung einem rohrartigen Strukturelement entspricht. Das erste Kreiselement weist einen im Wesentlichen einheitlichen ersten Kreisradius auf und ist somit im Wesentlichen kreisrund ausgestaltet, wobei ein Radius an einer ersten Stelle nicht mehr als 5%, bevorzugt nicht mehr als 3%, weiter bevorzugt nicht mehr als 1%, am bevorzugtesten nicht mehr als 0,5% vom Radius an einer weiteren Stelle abweicht. Das erste Kreiselement weist somit einen im Wesentlichen einheitlichen Durchmesser auf, wobei ein Durchmesser an einer ersten Stelle nicht mehr als 5%, bevorzugt nicht mehr als 3%, weiter bevorzugt nicht mehr als 1%, am bevorzugtesten nicht mehr als 0,5% vom Durchmesser an einer weiteren Stelle des Antiresonanzelementvorformlings abweicht. Der erste Kreisradius kann dabei beispielsweise in einem Bereich von 2 bis 18 mm, bevorzugt in einem Bereich von 3 bis 16 mm, weiter bevorzugt in einem Bereich von 4 bis 12 mm liegen. Das erste Kreiselement weist eine Wandstärke im Bereich von 0,1 mm bis 3 mm, vorzugsweise 0,1 mm bis 2 mm, weiter bevorzugt 0,2 bis 1,5 mm auf.

In einer axialen Aufsicht, das heißt in einer zweidimensionalen Betrachtung auf eine Längsachse, umfasst der Antiresonanzelementvorformling ein erstes Kreisbogenelement, was in einer dreidimensionalen Betrachtung einem parallel zur Längsachse ausgeschnittenem Segment eines rohrartigen, im Wesentlichen kreisrunden Strukturelements oder, in anderen Worten, einer gebogenen Scheibe entspricht. Das erste Kreisbogenelement weist einen im Wesentlichen einheitlichen ersten Kreisbogenradius auf. Das erste Kreisbogenelement stellt somit in einer dreidimensionalen Betrachtung ein parallel zur Längsachse ausgeschnittenes Segment eines im Wesentlichen kreisrunden rohrartigen Strukturelements dar, welches einen Radius aufweist, welcher dem Kreisbogenradius entspricht, wobei ein Radius an einer ersten Stelle nicht mehr als 5%, bevorzugt nicht mehr als 3%, weiter bevorzugt nicht mehr als 1%, am bevorzugtesten nicht mehr als 0,5% vom Radius an einer weiteren Stelle abweicht. Der erste Kreisbogenradius kann dabei beispielsweise in einem Bereich von 1 bis 30 mm, bevorzugt in einem Bereich von 2 bis 25 mm, weiter bevorzugt in einem Bereich von 3 bis 20 mm liegen. Das erste Kreisbogenelement weist eine Wandstärke im Bereich von 0,1 mm bis 3 mm, vorzugsweise 0,1 mm bis 2 mm, weiter bevorzugt 0,2 bis 1,5 mm auf.

Unter dem Kreisradius und dem Kreisbogenradius ist jeweils der Außenradius des entsprechenden Elements zu verstehen. Ein entsprechender Innenradius ergibt sich aus dem jeweiligen Außenradius abzüglich der jeweiligen Wandstärke. Analoges gilt für die entsprechenden Durchmesser.

Eine Kontaktstelle ist der Ort, an dem das erste Kreiselement und das erste Kreisbogenelement, insbesondere stoffschlüssig, miteinander verbunden sind. In einer Ausgestaltungsform ist das erste Kreisbogenelement mit einem ersten Kreisbogenende und einem dem ersten Kreisbogenende entgegengesetztem zweiten Kreisbogenende mit dem ersten Kreiselement verbunden. Das erste Kreiselement und das erste Kreisbogenelement sind an genau zwei Kontaktstellen miteinander verbunden.

Die Kontaktstellen können unterschiedlich ausgestaltet sein. In einer Ausgestaltungsform sind erste Kreiselement und erstes Kreisbogenelement an zumindest einer Kontaktstelle über ein Befestigungsmittel, wie beispielsweise einen Kleber, eine Niete, eine Schraube oder einen Nagel, miteinander verbunden. In einer bevorzugten Ausgestaltungsform sind das erste Kreiselement und das erste Kreisbogenelement zumindest an einer Kontaktstelle, bevorzugt an beiden Kontaktstellen, stoffschlüssig miteinander verbunden.

Um Antiresonanzelementvorformlinge mit hoher struktureller Präzision und verbesserten optischen Eigenschaften bereitzustellen, umfasst das erste Kreisbogenelement einen Kreisbogenelementumfang, welcher 10% bis 85 %, bevorzugt 20% bis 80 %, weiter bevorzugt 20% bis 75 %, noch weiter bevorzugt 20% bis 70% des Kreisumfangs eines dem ersten Kreisbogenradius entsprechenden vollständigen Kreiselements entspricht. Ein Vorteil ist dabei, dass die Kontaktstellen räumlich derart weit voneinander entfernt liegen, dass das erste Kreisbogenelement und der erste Kreisbogen miteinander verbunden sind, ohne dass die Kontaktstellen ineinander übergehen und somit eine große Kontaktstelle anstelle zweier disjunkter Kontaktstellen vorliegt. Eine große Kontaktstelle hätte negative Auswirkungen auf die optischen Lichtleitereigenschaften der finalen Glasfaser, beispielsweise durch eine lokale Erhöhung des Materialanteils, beispielsweise von Glas, an der großen Kontaktstelle, was zu einer Ovalität des Antiresonanzelements führen kann.

An den Kontaktstellen schließen das erste Kreiselement und das erste Kreisbogenelement jeweils einen Außenwinkel ein, welcher größer als 10°, bevorzugt größer als 15°, weiter bevorzugt größer 20°, am bevorzugtesten größer 25° ist. Der Außenwinkel ist dabei nicht größer als 160°, bevorzugt nicht größer als 150°, weiter bevorzugt nicht größer als 130°. Unter dem Außenwinkel ist der Winkel zu verstehen, welcher in einer axialen Aufsicht an der Kontaktestelle zwischen dem ersten Kreiselement und der konvexen Seite des ersten Kreisbogenelements eingeschlossen ist. Dies erlaubt eine Bereitstellung von Antiresonanzelementvorformlingen mit hoher struktureller Präzision und verbesserten optischen Eigenschaften.

In einer Ausführungsform umfasst oder besteht der gesamte Antiresonanzelementvorformling aus einem Material, welches für ein Arbeitslicht der optischen Faser transparent ist, beispielsweise Glas, insbesondere dotiertes oder nicht dotiertes Quarzglas (SiO2). Eine Dotierung ermöglich die Anpassung von physikalischen Eigenschaften, wie beispielsweise des thermischen Ausdehnungskoeffizienten. Als die Viskosität von Quarzglas absenkende Dotierstoffe kommen vorzugsweise Fluor, Chlor und/oder Hydroxylgruppen zum Einsatz.

Eine Ausgestaltungform des Antiresonanzelementvorformlings ist dadurch gekennzeichnet, dass das erste Kreiselement und das erste Kreisbogenelement wenigstens ein Glas, insbesondere ein dotiertes oder undotiertes Quarzglas, insbesondere ein Quarzglas mit einem Brechungsindex von mindestens 1,4, insbesondere 1,4 bis 3 oder ein Polymer, wie beispielsweise ein Polymethylmethacrylat, ein Cycle-Olefin-Copolymer, ein Polycarbonat oder ein Fluorpolymer, umfasst. In einer weiteren Ausgestaltungsform bestehen das erste Kreiselement und das erste Kreisbogenelement aus einem Glas, insbesondere aus einem dotierten oder undotierten Quarzglas, insbesondere aus einem Quarzglas mit einem Brechungsindex von mindestens 1,4, insbesondere 1,4 bis 3, oder einem Polymer, wie beispielsweise einem Polymethylmethacrylat, einem Cycle-Olefin-Copolymer, einem Polycarbonat oder einem Fluorpolymer.

In einer Ausgestaltungsform sind das erste Kreiselement und das erste Kreisbogenelement materialidentisch. In einer weiteren Ausgestaltungsform bestehen das erste Kreiselement und das erste Kreisbogenelement aus demselben Material, insbesondere aus nicht dotiertem oder dotiertem Quarzglas, insbesondere aus Glas mit einem Brechungsindex von mindestens 1,4, insbesondere 1,4 bis 3, insbesondere 1,4 bis 2,8, wobei die Menge der Dotierung 0,1 Gew.-% nicht überschreitet.

Der Begriff materialidentisch beschreibt die stoffliche Eigenschaft zweier Bauteile. Die zwei Bauteile weisen dabei im Wesentlichen denselben chemischen Stoff auf. Die Gesamtmasse der unterschiedlichen chemischen Elemente in beiden Teilen kann dabei weniger als 1 Gew.-%, insbesondere weniger als 0,5 Gew-%, insbesondere weniger als 0,1 Gew.-% betragen. Insbesondere unterscheidet sich die chemische Zusammensetzung der beiden Teile um einen Gehalt an Verunreinigungen von weniger als 500 Gewichts-ppm, insbesondere weniger als 100 Gewichts-ppm und/oder um einen Gehalt an Dotanden von weniger als 10000 Gewichts-ppm, insbesondere weniger als 5000 Gewichts-ppm.

In einer Ausgestaltungsform besteht der Antiresonanzelementvorformling aus dem ersten Kreiselement und dem ersten Kreisbogenelement.

Eine Ausgestaltungsform des Antiresonanzelementvorformlings ist dadurch gekennzeichnet, dass der Antiresonanzelementvorformling ein kreisförmiges zweites Kreiselement mit einem zweiten Kreisradius umfasst.

Das zweite Kreiselement kann die gleichen Merkmale und Eigenschaften aufweisen, wie das vorbeschriebene erste Kreiselement, wobei der zweite Kreisradius größer, kleiner oder identisch dem ersten Kreisradius ausgestaltet sein kann.

In einer Ausgestaltungsform ist das zweite Kreiselement innerhalb des ersten Kreiselements angeordnet. In einer Ausgestaltungsform sind erstes Kreiselement und zweites Kreiselement an einer Kontaktstelle, insbesondere stoffschlüssig, miteinander verbunden. In einer weiteren Ausgestaltungsform sind erstes Kreisbogenelement und zweites Kreiselement, insbesondere stoffschlüssig, miteinander verbunden. In einer weiteren Ausgestaltungsform ist das zweite Kreiselement sowohl mit dem ersten Kreiselement als auch mit dem ersten Kreisbogenelement, insbesondere stoffschlüssig, miteinander verbunden.

In einer weiteren Ausgestaltungsform ist das erste Kreiselement innerhalb des zweiten Kreiselements angeordnet, wobei erstes Kreiselement und zweites Kreiselement bevorzugt an einer Kontaktstelle, insbesondere stoffschlüssig, miteinander verbunden sind.

In einer weiteren Ausgestaltungsform ist das zweite Kreiselement innerhalb eines Raums angeordnet, welcher von erstem Kreiselement und ersten Kreisbogenelement umschlossen ist, wobei das zweite Kreiselement entweder mit dem ersten Kreiselement, mit dem ersten Kreisbogenelement oder mit erstem Kreiselement und erstem Kreisbogenelement, insbesondere stoffschlüssig, verbunden ist.

Eine Ausgestaltungsform des Antiresonanzelementvorformlings ist dadurch gekennzeichnet, dass der Antiresonanzelementvorformling ein kreisbogenförmiges zweites Kreisbogenelement mit einem zweiten Kreisbogenradius umfasst.

Das zweite Kreisbogenelement kann die gleichen Merkmale und Eigenschaften aufweisen, wie das vorbeschriebene erste Kreisbogenelement, wobei der zweite Kreisbogenradius größer, kleiner oder identisch dem ersten Kreisbogenradius ausgestaltet sein kann.

In einer Ausgestaltungsform ist das zweite Kreisbogenelement innerhalb des ersten Kreiselements angeordnet, wobei das erste Kreiselement und das zweite Kreisbogenelement bevorzugt an zwei Kontaktstellen, insbesondere stoffschlüssig, miteinander verbunden sind.

In einer weiteren Ausgestaltungsform ist das zweite Kreisbogenelement innerhalb des Raums angeordnet, welcher von erstem Kreiselement und erstem Kreisbogenelement umschlossen ist, wobei das zweite Kreisbogenelement entweder an zwei Kontaktstellen mit dem ersten Kreiselement, an zwei Kontaktstellen mit dem ersten Kreisbogenelement oder an einer Kontaktstelle mit dem ersten Kreiselement und an einer Kontaktstelle mit dem ersten Kreisbogenelement, insbesondere stoffschlüssig, verbunden ist.

Da der Antiresonanzelementvorformling ein erstes Kreiselement und ein erstes Kreisbogenelement als Strukturelemente aufweist, besteht bei der Wahl des ersten Kreisradius und des ersten Kreisbogenradius eine größere Freiheit als bei der ausschließlichen Verwendung von Kreiselementen als Strukturelemente zur Ausbildung des Antiresonanzelementvorformlings.

In einer Ausgestaltungsform weisen der erste Kreisradius und der erste Kreisbogenradius im Wesentlichen den gleichen Betrag auf. Die entsprechenden Struktureinheiten wären bei der ausschließlichen Verwendung von Kreiselementen zur Ausbildung des Antiresonanzelementvorformlings nicht zugänglich.

In einer weiteren Ausgestaltungsform weist der erste Kreisradius einen größeren Betrag als der erste Kreisbogenradius auf.

### A5

Eine Ausgestaltungsform des Antiresonanzelementvorformlings ist dadurch gekennzeichnet, dass der erste Kreisradius einen kleineren Betrag als der erste Kreisbogenradius aufweist. Die entsprechenden Struktureinheiten wären bei der ausschließlichen Verwendung von Kreiselementen zur Ausbildung des Antiresonanzelementvorformlings nicht zugänglich.

Das erste Kreiselement und das erste Kreisbogenelement können unterschiedlich zueinander angeordnet sein, solange beide an zumindest zwei, bevorzugt genau zwei Kontaktstellen miteinander, insbesondere stoffschlüssig, verbunden sind.

Eine Ausgestaltungsform des Antiresonanzelementvorformlings ist dadurch gekennzeichnet, dass das erste Kreisbogenelement innerhalb des ersten Kreiselements angeordnet ist. Dies bedeutet, dass das erste Kreisbogenelement an zwei Kontaktstellen mit einer Innenseite des ersten Kreiselements, insbesondere stoffschlüssig, verbunden ist. Das erste Kreisbogenelement ist somit auf der Innenseite des ersten Kreiselements angeordnet. Dies erlaubt eine Bereitstellung von kreisrunden, oder in einer dreidimensionalen Betrachtung von rohrartigen, und damit einfach zu handhabenden Antiresonanzelementvorformlingen mit verbesserten optischen Eigenschaften. Solche Antiresonanzelementvorformlinge lassen sich einfach und mit hoher struktureller Präzision mit weiteren Bauteilen einer Vorform zur Herstellung einer antiresonanten Hohlkernfaser verbinden.

Eine Ausgestaltungsform des Antiresonanzelementvorformlings ist dadurch gekennzeichnet, dass das erste Kreisbogenelement außerhalb des ersten Kreiselements angeordnet ist. Dies bedeutet, dass das erste Kreisbogenelement an zwei Kontaktstellen mit einer Außenseite des ersten Kreiselements, insbesondere stoffschlüssig, verbunden ist. Das erste Kreisbogenelement ist somit auf der Außenseite des ersten Kreiselements angeordnet. Dies erlaubt die Herstellung von Antiresonanzelementvorformlingen, welche in einer axialen Aufsicht die Kontur einer 8, oder, abhängig von den jeweiligen Radien des ersten Kreiselements und des ersten Kreisbogenelements, den Umriss einer unregelmäßigen 8 aufweisen.

Die Erfindung betrifft weiterhin ein Verfahren zur Herstellung eines vorbeschriebenen Antiresonanzelementvorformlings.

In Abhängigkeit der gewünschten Ausgestaltungsform des Antiresonanzelementvorformlings, kann das Verfahren auf unterschiedliche Weise durchgeführt werden.

Eine erste Ausgestaltungsform des Verfahrens zur Herstellung eines Antiresonanzelementvorformlings nach einer der vorbeschriebenen Ausgestaltungsformen umfasst zumindest die Verfahrensschritte
(a) Bereitstellen eines in axialer Aufsicht kreisförmigen ersten Kreiselements mit einem ersten Kreisradius;
(b) Bereitstellen eines in axialer Aufsicht kreisbogenförmigen ersten Kreisbogenelements mit einem ersten Kreisbogenradius;
(c1) Anordnen des ersten Kreisbogenelements (300) innerhalb des ersten Kreiselements (200), so dass ein erstes Kreisbogenende (305) und ein zweites Kreisbogenende (306) an einer Innenseite (205) des ersten Kreiselements (200) angeordnet sind;
(d) Verbinden, insbesondere stoffschlüssiges Verbinden, des ersten Kreisbogenendes und des zweiten Kreisbogenendes unter Ausbildung zweiter Kontaktstellen.

Die erste Ausgestaltungsform des Verfahrens zur Herstellung eines Antiresonanzelementvorformlings dient zur Herstellung der vorbeschriebenen Antiresonanzelementvorformlinge, bei welchen das erste Kreisbogenelement innerhalb des ersten Kreiselement angeordnet ist. Die erste Ausgestaltungsform des Verfahrens kann dazu dienen, im Wesentlichen kreisrunde Antiresonanzelementvorformlinge herzustellen.

Eine zweite Ausgestaltungsform des Verfahrens zur Herstellung eines Antiresonanzelementvorformlings nach einer der vorbeschriebenen Ausgestaltungsformen umfasst zumindest die Verfahrensschritte
(a) Bereitstellen eines in axialer Aufsicht kreisförmigen ersten Kreiselements mit einem ersten Kreisradius;
(b) Bereitstellen eines in axialer Aufsicht kreisbogenförmigen ersten Kreisbogenelements mit einem ersten Kreisbogenradius;
(c2) Anordnen des ersten Kreisbogenelements außerhalb des ersten Kreiselements, so dass ein erstes Kreisbogenende und ein zweites Kreisbogenende an einer Außenseite des ersten Kreiselements angeordnet sind;
(d) Verbinden, insbesondere stoffschlüssiges Verbinden, des ersten Kreisbogenendes und des zweiten Kreisbogenendes unter Ausbildung zweiter Kontaktstellen.

Die zweite Ausgestaltungsform des Verfahrens zur Herstellung eines Antiresonanzelementvorformlings dient zur Herstellung der vorbeschriebenen Antiresonanzelementvorformlinge, bei welchen das erste Kreisbogenelement außerhalb des ersten Kreiselement angeordnet ist. Die zweite Ausgestaltungsform des Verfahrens kann dazu dienen, Antiresonanzelemente mit einer Kontur, in axialer Aufsicht, in Form einer 8 oder, in Abhängigkeit der entsprechenden Radien des ersten Kreiselements und des ersten Kreisbogenelements, in Form einer unregelmäßigen 8 herzustellen.

Das Verbinden in Verfahrensschritt (d) kann in allen Ausführungsformen des Verfahrens auf unterschiedliche Weise erfolgen, beispielsweise über Verkleben, Verschrauben, Vernieten, Verschweißen, Vernageln oder Verklemmen.

Eine Ausgestaltungsform des Verfahrens zur Herstellung eines vorbeschriebenen Antiresonanzelementvorformlings ist dadurch gekennzeichnet, dass das Verbinden in Verfahrensschritt (d) durch einen Wärmeeintrag erfolgt.

Der Wärmeeintrag dient insbesondere zum stoffschlüssigen Verbinden von erstem Kreiselement und erstem Kreisbogenelement an den Kontaktstellen. Der Wärmeeintrag muss derart erfolgen, dass eine stoffschlüssige Verbindung zwischen den Materialien der beiden Elemente möglich ist. Dies kann erreicht werden, indem die Oberflächen der Elemente zumindest an den Kontaktstellen zumindest partiell aus dem festen Zustand in den flüssigen, insbesondere zähflüssigen, Zustand wechseln.

Der Wärmeeintrag kann auf unterschiedliche Weise realisiert werden, beispielsweise durch:
- Flammenbasierte Prozesse: basieren auf der Oxidation eines exotherm reagierenden Gases. Ein Beispiel ist die Nutzung von Wasserstoff - auch als "H2" bezeichnet - als Brenngas (die Flammenhydrolyse). Es reagiert mit dem Sauerstoff - auch als "O2" bezeichnet - in der Luft; oder
- Flammenfreie Prozesse: nutzen andere sich erwärmende Systeme, die keiner offenen Flamme benötigen. Ein Beispiel ist die Nutzung eines Widerstands, der elektrische Energie in thermische Energie (Wärme) umzuwandeln vermag.

Die Erfindung betrifft weiterhin eine Vorform zur Herstellung einer antiresonanten Hohlkernfaser umfassend ein Hüllrohr, dadurch gekennzeichnet, dass in dem Hüllrohr zumindest ein vorbeschriebener Antiresonanzelementvorformling angeordnet ist.

Die Vorform ist dasjenige Bauteil, aus dem die antiresonante Hohlkernfaser gezogen werden kann. Alternativ kann die Vorform zu einer sekundären Vorform weiterverarbeitet werden, aus der die antiresonante Hohlkernfaser gezogen wird. Die Weiterverarbeitung kann eine einmalige oder wiederholte Durchführung von Heißformprozessen wie z.B. Elongieren, Kollabieren oder Aufkollabieren von zusätzlichem Mantelmaterial umfassen.

Ein Hüllrohr ist ein im Wesentlichen aus Quarzglas gefertigtes rohrförmiges Element, in welchem zumindest einer der vorbeschriebenen Antiresonanzelementvorformlinge angeordnet ist. Beim Ausziehen der Vorform zur finalen Faser umgibt das Hüllrohr den Hohlkern der antiresonanten Hohlkernfaser. In einer Ausgestaltungsform weist das Hüllrohr einen Innendurchmesser im Bereich von 10 bis 60 mm auf. In einer Ausgestaltungsform weist das Hüllrohr einen Außendurchmesser im Bereich von 25 bis 250 mm, vorzugsweise von 30 bis 200 mm auf. In einer Ausgestaltungsform weist das Hüllrohr eine Länge im Bereich von 500 bis 1200 mm auf.

Der zumindest eine Antiresonanzelementvorformling kann auf unterschiedliche Weise innerhalb des Hüllrohrs angeordnet sein.

Eine Ausgestaltungsform der Vorform ist dadurch gekennzeichnet, dass der zumindest eine Antiresonanzelementvorformling mit einer Innenfläche des Hüllrohrs, insbesondere stoffschlüssig, verbunden ist. In einer Ausgestaltungsform ist der Antiresonanzelementvorformling über das erste Kreiselement mit dem Hüllrohr verbunden. In einer weiteren Ausgestaltungsform ist der Antiresonanzelementvorformling über das erste Kreisbogenelement mit dem Hüllrohr verbunden, wobei bei diesen Antiresonanzelementen das erste Kreisbogenelement außerhalb des ersten Kreiselements angeordnet ist.

Zur Ausbildung der Vorform können unterschiedlich viele Antiresonanzelemente innerhalb des Hüllrohrs angeordnet werden.

Eine Ausgestaltungsform der Vorform ist dadurch gekennzeichnet, dass in dem Hüllrohr 3 bis 10, bevorzugt 3 bis 8, weiter bevorzugt 4 bis 6 Antiresonanzelemente angeordnet sind.

In einer Ausgestaltungsform sind ausschließlich solche Antiresonanzelementvorformlinge innerhalb des Hüllrohrs angeordnet, welche die Eigenschaften und Merkmale der vorbeschriebenen Antiresonanzelementvorformlinge aufweisen. In weiteren Ausgestaltungsformen weist zumindest ein innerhalb des Hüllrohrs angeordneter Antiresonanzelementvorformlinge andere Merkmale und Eigenschaften als die vorbeschriebenen Antiresonanzelementvorformlinge auf.

Die Erfindung betrifft weiterhin eine antiresonante Hohlkernfaser, in axialer Aufsicht umfassend einen Mantelbereich und zumindest ein innerhalb des Mantelbereichs angeordnetes Antiresonanzelement umfassend eine kreisförmige erste Kreisstruktur mit einem ersten Kreisstrukturradius und eine kreisbogenförmige erste Kreisbogenstruktur mit einem ersten Kreisbogenstrukturradius, dadurch gekennzeichnet, dass die erste Kreisstruktur und die erste Kreisbogenstruktur an zwei Kontaktstellen miteinander verbunden sind.

Die antiresonante Hohlkernfaser ist aus den vorbeschriebenen Vorformen, insbesondere durch Elongieren, herstellbar, wobei aus dem Hüllrohr der Vorform zumindest ein Teil des Mantelbereichs der antiresonanten Hohlkernfaser und aus dem zumindest einen Antiresonanzelementvorformling der Vorform das zumindest eine Antiresonanzelement der antiresonanten Hohlkernfaser ausgebildet wird. Entsprechend bildet sich aus dem ersten Kreiselement die erste Kreisstruktur und aus dem ersten Kreisbogenelement die erste Kreisbogenstruktur aus. Die jeweiligen Kontaktstellen bleiben erhalten.

Beim Elongieren wird die Vorform gelängt. Das Elongieren erfolgt bevorzugt maßstäblich, so dass sich beispielsweise die Form und Anordnung von Bauteilen oder Bestandteilen der Vorform, insbesondere des ersten Kreiselements und des ersten Kreisbogenelements, im elongierten Endprodukt widerspiegeln.

In einer Ausgestaltungsform der antiresonanten Hohlkernfaser entspricht der Mantelbereich dem elongierten Hüllrohr. In einer weiteren Ausgestaltungsform entspricht der Mantelbereich dem Hüllrohr und einem vor oder während dem Elongieren auf das Hüllrohr aufkollabierten Überfangrohr. Unter "Aufkollabieren" ist ein, insbesondere stoffschlüssiges, Verbinden von Hüllrohr und einem Überfangrohr zu verstehen, welches insbesondere mittels Wärmeeintrag und bevorzugt unter Zuhilfenahme eines Unterdrucks, angelegt zwischen Hüllrohr und Überfangrohr, erfolgt.

Zum Elongieren und Erzeugen der antiresonanten Hohlkernfaser aus der Vorform, kann die Vorform senkrecht durch einen Ofen geführt werden. Dabei wird ein unteres Ende der Vorform, aus dem in Form einer Ziehzwiebel die antiresonante Hohlkernfaser gezogen wird, auf Ziehtemperatur erwärmt, wobei die gezogene Faser anschließend durch einen der Ziehrichtung entgegengerichteten Gasstrom von der Ziehtemperatur heruntergekühlt wird.

Die in der Beschreibung offenbarten Eigenschaften und Merkmale können für verschiedene Ausgestaltungsformen der beanspruchten Erfindung sowohl getrennt als auch in beliebiger Kombination miteinander wesentlich sein. Die für die Antiresonanzelementvorformlinge, die Vorform oder die antiresonante Hohlkernfaser offenbarten Eigenschaften und Merkmale sind auch für das Verfahren offenbart und umgekehrt.

Die Erfindung wird im Folgenden durch Figuren weiter beispielhaft illustriert. Die Erfindung ist nicht auf die Figuren beschränkt.

### Figuren

Die Erfindung wird im Folgenden durch Figuren weiter beispielhaft illustriert. Die Erfindung ist nicht auf die Figuren beschränkt.

Es zeigen
- Fig. 1: eine axiale Aufsicht auf einen Antiresonanzelementvorformling umfassend ein erstes Kreiselement und ein erstes Kreisbogenelement
- Fig. 2: eine weitere Ausführungsform eines Antiresonanzelementvorformlings,
- Fig. 3: eine weitere Ausführungsform eines Antiresonanzelementvorformlings,
- Fig. 4: eine weitere Ausführungsform eines Antiresonanzelementvorformlings,
- Fig. 5: eine weitere Ausführungsform eines Antiresonanzelementvorformlings,
- Fig. 6: eine weitere Ausführungsform eines Antiresonanzelementvorformlings,
- Fig. 7: eine weitere Ausführungsform eines Antiresonanzelementvorformlings,
- Fig. 8: eine weitere Ausführungsform eines Antiresonanzelementvorformlings,
- Fig. 9: eine weitere Ausführungsform eines Antiresonanzelementvorformlings,
- Fig. 10: eine axiale Aufsicht auf eine Vorform einer antiresonanten Hohlkernfaser,
- Fig. 11: eine axiale Aufsicht auf eine antiresonante Hohlkernfaser, und
- Fig. 12: ein Verfahren zur Herstellung eines Antiresonanzelementvorformlings.

### Beschreibung der Figuren

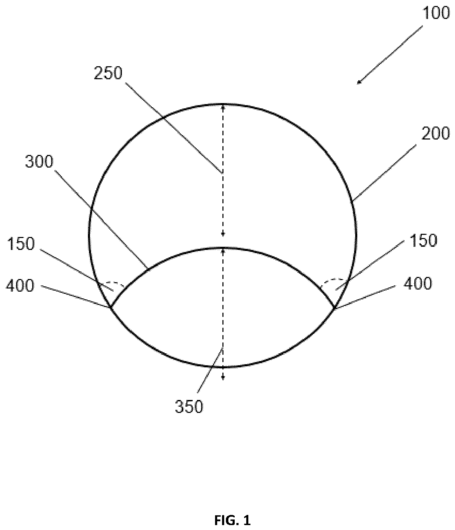

**Figur 1** zeigt einen Antiresonanzelementvorformling 100 in einer axialen Aufsicht. Der Antiresonanzelementvorformling 100 umfasst ein kreisförmiges erstes Kreiselement 200 mit einem ersten Kreisradius 250. Innerhalb des ersten Kreiselements 200 ist ein erstes Kreisbogenelement 300 mit einem ersten Kreisbogenradius 350 angeordnet. In der gezeigten Ausführungsform des Antiresonanzelementvorformlings 100 weisen der erste Kreisradius 250 und der erste Kreisbogenradius 350 den gleichen Betrag auf. Das erste Kreiselement 200 und das erste Kreisbogenelement 300 sind an zwei Kontaktstellen 400, insbesondere stoffschlüssig, miteinander verbunden. An den Kontaktstellen 400 schließen die konvexe Seite des ersten Kreisbogenelements 300 und die Innenseite des ersten Kreisbogens jeweils einen Außenwinkel 150 ein, welche durch den symmetrischen Aufbau des Antiresonanzelementvorformlings 100 in der gezeigten Ausführungsform den gleichen Betrag aufweisen. In weiteren, nicht gezeigten Ausführungsformen sind die beiden Außenwinkel 150 nicht gleich groß. In der dargestellten Ausführungsform sind das erste Kreiselement 200 und das erste Kreisbogenelement 300 materialidentisch, insbesondere aus einem dotierten oder undotierten Quarzglas, ausgeformt.

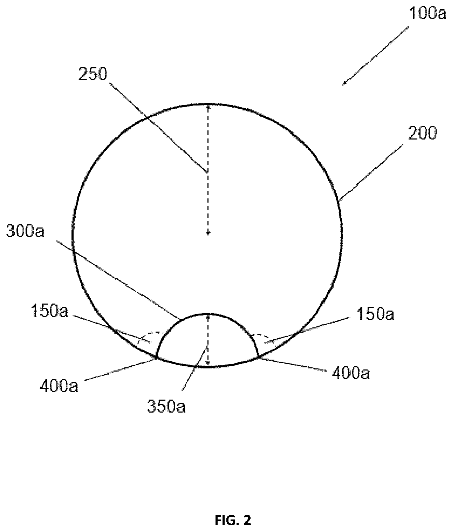

**Figur 2** zeigt eine weitere Ausführungsform eines Antiresonanzelementvorformlings 100a. Die Ausführungsform gemäß Figur 2 stimmt weitgehend mit der vorstehend beschriebenen und in Figur 1 dargestellten Ausführungsform überein, so dass zur Vermeidung von Wiederholungen auf die vorstehende Beschreibung verwiesen wird. Eine Struktur, die aus der Beschreibung der Figur 1 wiederholt wird, weist dasselbe Bezugszeichen auf. Abwandlungen einer gegenüber der in der Figur 1 gezeigten Struktur weisen dasselbe Bezugszeichen mit einem zusätzlichen Buchstaben a auf.
In der gezeigten Ausführungsform weist der erste Kreisradius 250 einen größeren Betrag als der erste Kreisbogenradius 350a auf, wodurch der Außenwinkel 150a größer als der Außenwinkel 150 gemäß Figur 1 ist. Durch den gegenüber Figur 1 kleineren ersten Kreisbogenradius 350a, liegen auch die Kontaktstellen 400a gegenüber den Kontaktstellen 400 der Figur 1 näher zusammen.

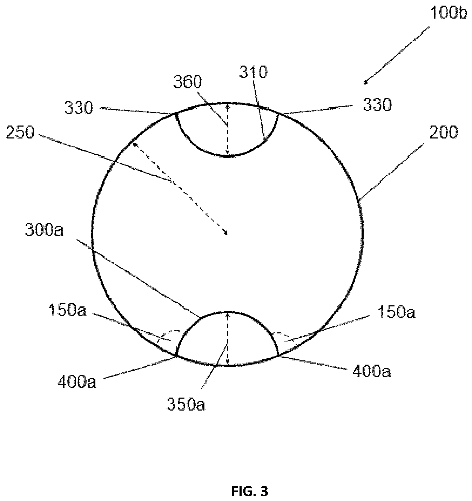

**Figur 3** zeigt eine weitere Ausführungsform eines Antiresonanzelementvorformlings 100b. Die Ausführungsform gemäß Figur 3 stimmt weitgehend mit den vorstehend beschriebenen und in den vorstehenden Figuren dargestellten Ausführungsformen überein, so dass zur Vermeidung von Wiederholungen auf die vorstehenden Beschreibungen verwiesen wird. Eine Struktur, die aus der Beschreibung der vorstehenden Figuren wiederholt wird, weist dasselbe Bezugszeichen auf. Abwandlungen einer gegenüber der in den vorstehenden Figuren gezeigten Struktur weisen dasselbe Bezugszeichen mit einem zusätzlichen Buchstaben b auf. Die weitere Ausführungsform des Antiresonanzelementvorformlings 100b weist gegenüber der Ausführungsform 100a in Figur 2 ein kreisbogenförmiges zweites Kreisbogenelement 310 mit einem zweiten Kreisbogenradius 360 auf. Das zweite Kreisbogenelement 310 ist, ebenso wie das erste Kreisbogenelement 300a innerhalb des ersten Kreiselements 200 angeordnet, und mit dem ersten Kreiselement 200 an zwei Kontaktstellen 330 miteinander verbunden. In der gezeigten Ausführungsform besitzen der erste Kreisbogenradius 350a und der zweite Kreisbogenradius 360 den gleichen Betrag. In weiteren, nicht gezeigten Ausführungsformen können der erste Kreisbogenradius 350a und der zweite Kreisbogenradius 360 unterschiedliche Beträge aufweisen. In der gezeigten Ausführungsform sind das erste Kreisbogenelement 300a und das zweite Kreisbogenelement 360 an gegenüberliegenden Innenseiten des ersten Kreiselements 200 angeordnet, so dass sich die entsprechenden konvexen Seiten des ersten Kreisbogenelements 300a und des zweiten Kreisbogenelements 310 einander zugewandt sind. In weiteren, nicht gezeigten Ausführungsformen sind das erste Kreisbogenelement 300a und das zweite Kreisbogenelement 310 in größerer räumlicher Nähe zueinander an der Innenseite des ersten Kreiselements 200 angeordnet.

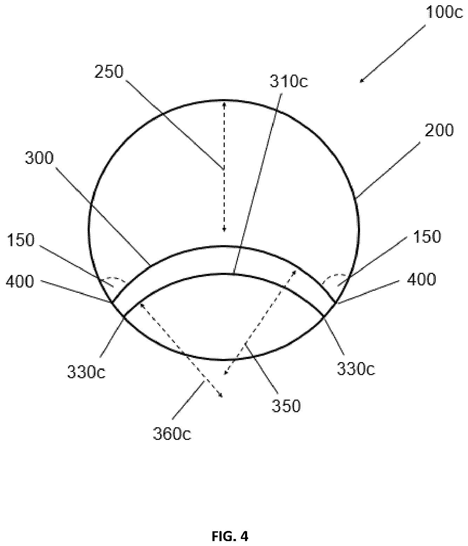

**Figur 4** zeigt eine weitere Ausführungsform eines Antiresonanzelementvorformlings 100c. Die Ausführungsform gemäß Figur 4 stimmt weitgehend mit den vorstehend beschriebenen und in den vorstehenden Figuren dargestellten Ausführungsformen überein, so dass zur Vermeidung von Wiederholungen auf die vorstehenden Beschreibungen verwiesen wird. Eine Struktur, die aus der Beschreibung der vorstehenden Figuren wiederholt wird, weist dasselbe Bezugszeichen auf. Abwandlungen einer gegenüber der in den vorstehenden Figuren gezeigten Struktur weisen dasselbe Bezugszeichen mit einem zusätzlichen Buchstaben c auf.
In der gezeigten Ausführungsform ist das zweite Kreisbogenelement 310c auf der gleichen Seite innerhalb des ersten Kreiselements 200 angeordnet wie das erste Kreisbogenelement 300, wobei der erste Kreisbogenradius 350 und der zweite Kreisbogenradius 360c den gleichen Betrag aufweisen. Das erste Kreisbogenelement 350 und das zweite Kreisbogenelement 310c sind derart zueinander angeordnet, dass die konvexe Seite des zweiten Kreisbogenelements 310c der konkaven Seite des ersten Kreisbogenelements 300 zugewandt ist. In weiteren, nicht gezeigten Ausführungsformen sind das erste Kreisbogenelement 350 und das zweite Kreisbogenelement 310c derart zueinander angeordnet, dass die konkave Seite des zweiten Kreisbogenelements 310c der konkaven Seite des ersten Kreisbogenelements 350 zugewandt ist.

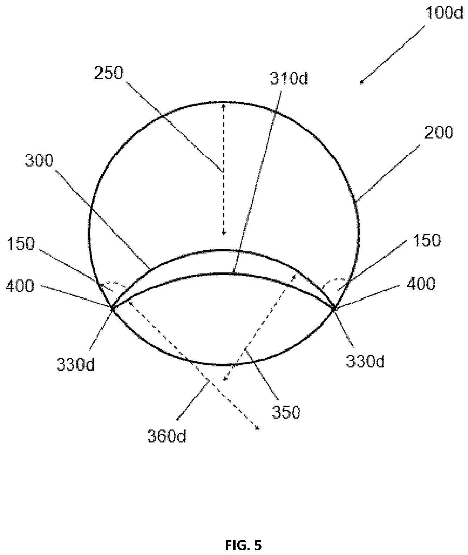

**Figur 5** zeigt eine weitere Ausführungsform eines Antiresonanzelementvorformlings 100d. Die Ausführungsform gemäß Figur 5 stimmt weitgehend mit den vorstehend beschriebenen und in den vorstehenden Figuren dargestellten Ausführungsformen überein, so dass zur Vermeidung von Wiederholungen auf die vorstehenden Beschreibungen verwiesen wird. Eine Struktur, die aus der Beschreibung der vorstehenden Figuren wiederholt wird, weist dasselbe Bezugszeichen auf. Abwandlungen einer gegenüber der in den vorstehenden Figuren gezeigten Struktur weisen dasselbe Bezugszeichen mit einem zusätzlichen Buchstaben d auf.
In der gezeigten Ausführungsform des Antiresonanzelementvorformlings 100d ist das zweite Kreisbogenelement 310d, wie schon in Figur 4, auf der gleichen Seite innerhalb des ersten Kreiselements 200 angeordnet wie das erste Kreisbogenelement 300, wobei der erste Kreisbogenradius 350 einen kleineren Betrag als der zweite Kreisbogenradius 360d aufweist. Das erste Kreisbogenelement 300 und das zweite Kreisbogenelement 360 sind an den gleichen Stellen des ersten Kreiselement 200 angeordnet, so dass die Kontaktstellen 400 des ersten Kreisbogenelements 400 und die Kontaktstellen 330d des zweiten Kreisbogenelements 330 mit dem ersten Kreisbogen 200 aufeinander fallen. Das erste Kreisbogenelement 350 und das zweite Kreisbogenelement 310d sind derart zueinander angeordnet, dass die konvexe Seite des zweiten Kreisbogenelements 310d der konkaven Seite des ersten Kreisbogenelements 300 zugewandt ist. In weiteren, nicht gezeigten Ausführungsformen sind das erste Kreisbogenelement 350 und das zweite Kreisbogenelement 310d derart zueinander angeordnet, dass die konkave Seite des zweiten Kreisbogenelements 310d der konkaven Seite des ersten Kreisbogenelements 350 zugewandt ist.

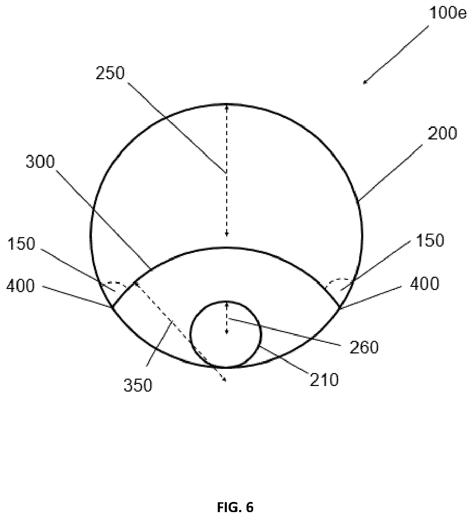

**Figur 6** zeigt eine weitere Ausführungsform eines Antiresonanzelementvorformlings 100e. Die Ausführungsform gemäß Figur 6 stimmt weitgehend mit den vorstehend beschriebenen und in den vorstehenden Figuren dargestellten Ausführungsformen überein, so dass zur Vermeidung von Wiederholungen auf die vorstehenden Beschreibungen verwiesen wird. Eine Struktur, die aus der Beschreibung der vorstehenden Figuren wiederholt wird, weist dasselbe Bezugszeichen auf. Abwandlungen einer gegenüber der in den vorstehenden Figuren gezeigten Struktur weisen dasselbe Bezugszeichen mit einem zusätzlichen Buchstaben e auf.
Die gezeigte Ausführungsform des Antiresonanzelementvorformlings 100e weist ein zweites Kreiselement 210 mit einem zweiten Kreisradius 260 auf. Das zweite Kreiselement 210 ist innerhalb eines Raums angeordnet, welcher durch die Innenseite des ersten Kreiselements 200 und die konkave Seite des ersten Kreisbogenelement 300 ausgebildet ist. Das zweite Kreiselement 210 ist dabei mit dem ersten Kreiselement 200 verbunden. In weiteren, nicht gezeigten Ausführungsformen ist das zweite Kreiselement 210 mit dem ersten Kreisbogenelement 300 oder mit dem ersten Kreiselement 200 und dem ersten Kreisbogenelement 300 verbunden. In weiteren, nicht gezeigten Ausführungsformen ist das zweite Kreiselement 210 innerhalb eines Raums angeordnet, welcher durch die Innenseite des ersten Kreiselements 200 und die konvexe Seite des ersten Kreisbogenelements 300 ausgebildet ist, wobei das zweite Kreiselement 210 mit dem ersten Kreisbogenelement 300 und/oder mit dem ersten Kreiselement 200 verbunden ist.

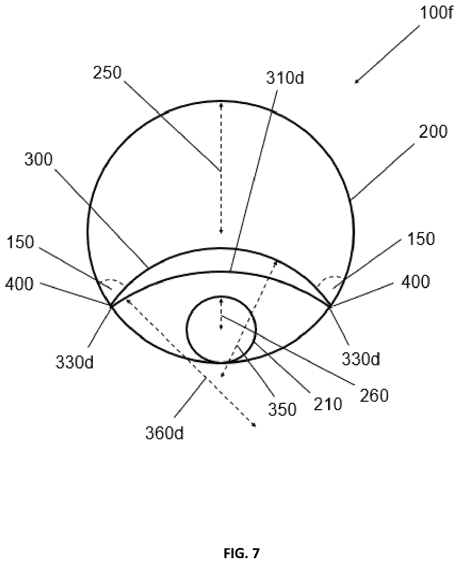

**Figur 7** zeigt eine weitere Ausführungsform eines Antiresonanzelementvorformlings 100f. Die Ausführungsform gemäß Figur 7 stimmt weitgehend mit den vorstehend beschriebenen und in den vorstehenden Figuren dargestellten Ausführungsformen überein, so dass zur Vermeidung von Wiederholungen auf die vorstehenden Beschreibungen verwiesen wird. Eine Struktur, die aus der Beschreibung der vorstehenden Figuren wiederholt wird, weist dasselbe Bezugszeichen auf. Abwandlungen einer gegenüber der in den vorstehenden Figuren gezeigten Struktur weisen dasselbe Bezugszeichen mit einem zusätzlichen Buchstaben f auf.
In der gezeigten Ausführungsform ist das zweite Kreiselement 210 innerhalb eines Raums angeordnet, welcher durch die konkave Seite des zweiten Kreisbogenelements 210d und die Innenseite des ersten Kreiselements 200 ausgebildet ist. Das zweite Kreiselement 210 ist dabei mit dem ersten Kreiselement 200 verbunden. In weiteren, nicht gezeigten Ausführungsformen ist das zweite Kreiselement 210 mit dem zweiten Kreisbogenelement 210 oder mit dem ersten Kreiselement 200 und dem zweiten Kreisbogenelement 310d verbunden. In weiteren, nicht gezeigten, Ausführungsformen ist das zweite Kreiselement 210 im Raum angeordnet, welcher durch die konvexe Seite des ersten Kreisbogenelements 300 und der Innenseite des ersten Kreiselements 200 ausgebildet ist. In weiteren Ausführungsformen ist das zweite Kreiselement 210 in einem Raum angeordnet, welcher durch das erste Kreisbogenelement 300 und das zweite Kreisbogenelement 310d ausgebildet ist, wobei das zweite Kreiselement 210 entweder mit dem ersten Kreisbogenelement 300, dem zweiten Kreisbogenelement 310d oder dem ersten Kreisbogenelement 300 und dem zweiten Kreisbogenelement 310d verbunden ist,

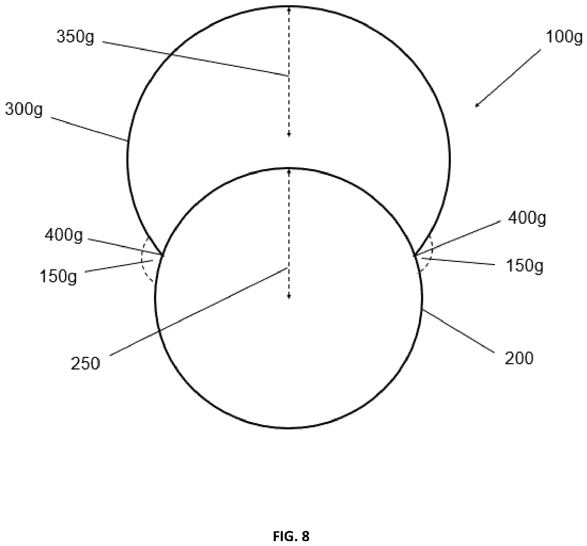

**Figur 8** zeigt eine weitere Ausführungsform eines Antiresonanzelementvorformlings 100g. Die Ausführungsform gemäß Figur 8 stimmt weitgehend mit den vorstehend beschriebenen und in den vorstehenden Figuren dargestellten Ausführungsformen überein, so dass zur Vermeidung von Wiederholungen auf die vorstehenden Beschreibungen verwiesen wird. Eine Struktur, die aus der Beschreibung der vorstehenden Figuren wiederholt wird, weist dasselbe Bezugszeichen auf. Abwandlungen einer gegenüber der in den vorstehenden Figuren gezeigten Struktur weisen dasselbe Bezugszeichen mit einem zusätzlichen Buchstaben g auf.
Das erste Kreisbogenelement 300g ist außerhalb des ersten Kreiselements 200 angeordnet und mit diesem an zwei Kontaktstellen 400g verbunden, wobei das erste Kreiselement 200 und das erste Kreisbogenelement 300g an den zwei Kontaktstellen 400 jeweils den Außenwinkel 150g aufweisen. Der Antiresonanzelementvorformling 100g weist eine Kontur auf, welcher im Wesentlichen der Kontur einer 8 entspricht. In der gezeigten Ausführungsform weist der erste Kreisbogenradius 350g einen größeren Betrag als der erste Kreisradius 250 auf. In weiteren, nicht gezeigten Ausführungsformen weist der erste Kreisbogenradius 350g einen gleich großen oder einen kleineren Betrag als der erste Kreisradius 250 auf.

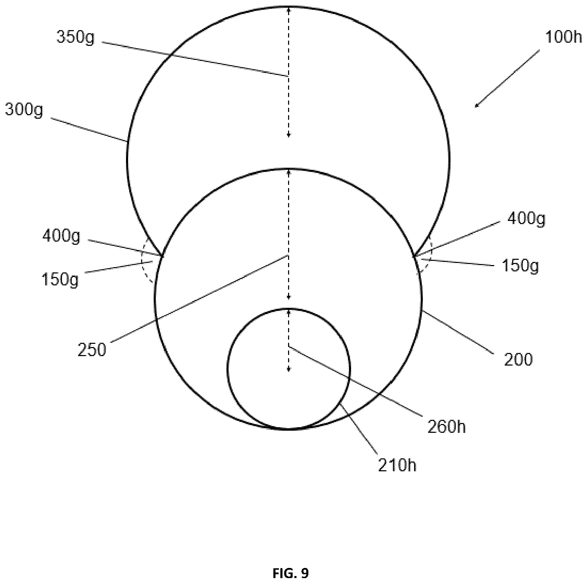

**Figur 9** zeigt eine weitere Ausführungsform eines Antiresonanzelementvorformlings 100h. Die Ausführungsform gemäß Figur 9 stimmt weitgehend mit den vorstehend beschriebenen und in den vorstehenden Figuren dargestellten Ausführungsformen überein, so dass zur Vermeidung von Wiederholungen auf die vorstehenden Beschreibungen verwiesen wird. Eine Struktur, die aus der Beschreibung der vorstehenden Figuren wiederholt wird, weist dasselbe Bezugszeichen auf. Abwandlungen einer gegenüber der in den vorstehenden Figuren gezeigten Struktur weisen dasselbe Bezugszeichen mit einem zusätzlichen Buchstaben h auf.
Die gezeigte Ausführungsform weist das außerhalb des ersten Kreiselements 200 angeordnete erste Kreisbogenelement 300g und das innerhalb des ersten Kreiselements 200 angeordneten zweite Kreiselement 210h mit einem zweiten Kreiselementradius 260h auf, wobei das zweite Kreiselement 210h und das erste Kreisbogenelement 300g an gegenüberliegenden Seiten des ersten Kreiselements 200 angeordnet sind. In weiteren, nicht gezeigten Ausführungsformen sind das erste Kreisbogenelement 300g und das zweite Kreiselement 210h auf der gleichen Seite des ersten Kreiselements 200 angeordnet. In weiteren, nicht gezeigten Ausführungsformen ist das zweite Kreiselement 210h innerhalb eines Raums angeordnet, welcher durch die konkave Seite des ersten Kreisbogenelements 300g und das erste Kreiselement 200 ausgebildet ist, wobei das zweite Kreiselements 210g mit dem ersten Kreiselement 200 und/oder mit dem ersten Kreisbogenelement 300g verbunden sein kann.

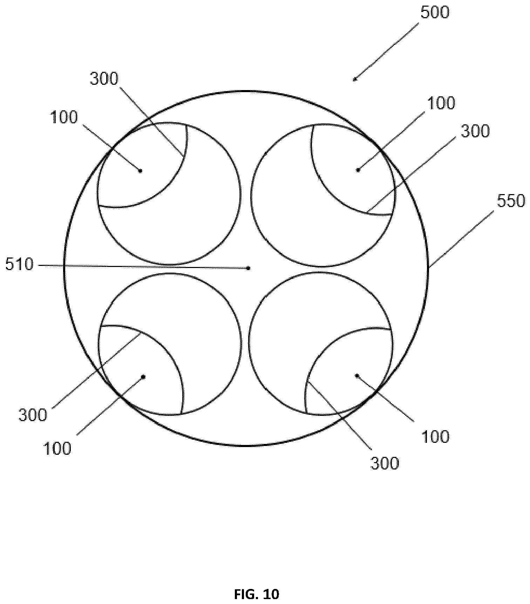

**Figur 10** zeigt eine Vorform 500 umfassend ein Hüllrohr 550 und vier innerhalb des Hüllrohrs 550 angeordnete Antiresonanzelementvorformlinge 100 gemäß Figur 1. In weiteren, nicht gezeigten Ausführungsformen umfasst die Vorform 500 eine andere Anzahl, beispielsweise 2 bis 10, an Antiresonanzelementvorformlingen 100 und/oder anders ausgeformte erfindungsgemäße Antiresonanzelementvorformling, beispielsweise nach einer der Figuren 2 bis 9, oder die Vorform 500 umfasst zwei oder mehr unterschiedliche erfindungsgemäße Ausführungsformen der Antiresonanzelementvorformlinge, beispielsweise gemäß den Figuren 1 bis 9.
In der gezeigten Ausführungsform sind die vier Antiresonanzelementvorformlinge 100 mit einer Innenseite des Hüllrohrs 550 verbunden. Die Verteilung der Antiresonanzelemente 100 an der Innenseite des Hüllrohrs 500 ist symmetrisch, so dass aus der Vorform 500 eine symmetrische antiresonante Hohlkernfaser durch Elongieren der Vorform 500 herstellbar ist, welche verbesserte optische Eigenschaften aufweist. Die vier Antiresonanzelementvorformlinge 100 sind derart an dem Hüllrohr 550 angeordnet, dass die konvexe Seite der jeweiligen ersten Kreisbogenelemente 300 in Richtung eines Mittelpunktes 510 der Vorform 500 ausgerichtet sind. In weiteren, nicht gezeigten Ausführungsformen können die konkaven Seiten der ersten Kreisbogenelement 300 in Richtung des Mittelpunktes 510 ausgerichtet sein oder eine Anzahl an Kreisbogenelementen 300 kann mit der jeweiligen konvexen Seite und eine Anzahl an ersten Kreisbogenelementen 300 kann mit der jeweiligen konkaven Seite in Richtung des Mittelpunktes 510 ausgerichtet sein. Vorzugsweise ist die Anordnung der Kreisbogenelemente 300 symmetrisch bezüglich des Mittelpunktes 510 ausgestaltet.

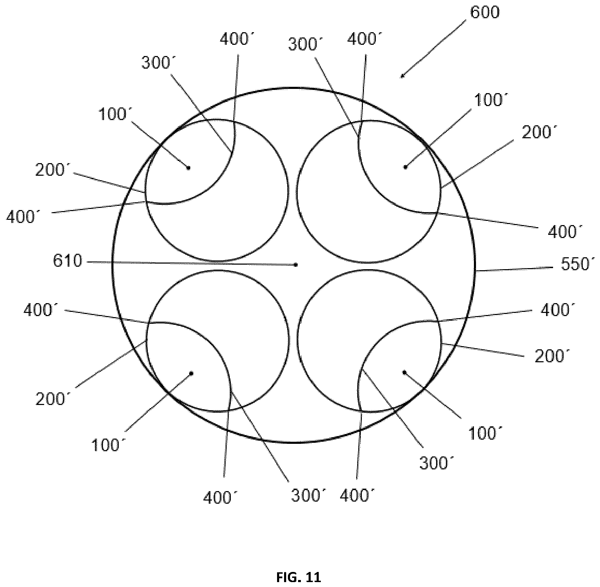

**Figur 11** zeigt eine antiresonante Hohlkernfaser 600, beispielsweise herstellbar durch Elongieren einer Vorform 500 gemäß Figur 10, umfassend einen Mantelbereich 550' und vier innerhalb des Mantelbereichs 550' angeordnete Antiresonanzelemente 100'. In weiteren, nicht gezeigten Ausführungsformen umfasst die antiresonante Hohlkernfaser 600 eine andere Anzahl, beispielsweise 2 bis 10, an Antiresonanzelementen 100'. Die Antiresonanzelemente 100' weisen eine kreisförmige erste Kreisstruktur 200' und eine kreisbogenförmige erste Kreisbogenstruktur 300' auf. Die ersten Kreisbogenstrukturen 300' sind mit den jeweiligen ersten Kreisstrukturen 200' an jeweils zwei Kontaktstellen 400' miteinander verbunden. In der gezeigten Ausführungsform weist die antiresonante Hohlkernfaser 600 Strukturen auf, welche durch Elongieren einer Vorform 500 gemäß Figur 10 erhältlich sind. In weiteren, nicht gezeigten Ausführungsformen weist die antiresonante Hohlkernfaser anders ausgeformte Antiresonanzelemente 100' auf, welche durch andere erfindungsgemäße Antiresonanzelementvorformlinge, beispielsweise gemäß den Figuren 2 bis 9, durch Elongieren erhältlich sind. Die vier Antiresonanzelemente 100' sind derart an dem Mantelbereich 550' angeordnet, dass die konvexe Seite der jeweiligen ersten Kreisbogenstrukturen 300' in Richtung eines Hohlkernfasermittelpunktes 610 der antiresonanten Hohlkernfaser 600 ausgerichtet sind. In weiteren, nicht gezeigten Ausführungsformen können die konkaven Seiten der ersten Kreisbogenstrukturen 300' in Richtung des Hohlkernfasermittelpunktes 610 ausgerichtet sein oder eine Anzahl an Kreisbogenstrukturen 300' kann mit der jeweiligen konvexen Seite und eine Anzahl an ersten Kreisbogenstrukturen 300' kann mit der jeweiligen konkaven Seite in Richtung des Hohlkernfasermittelpunktes 610 ausgerichtet sein. Vorzugsweise ist die Anordnung der Kreisbogenstrukturen 300' symmetrisch bezüglich des Hohlkernfasermittelpunktes 610 ausgestaltet.

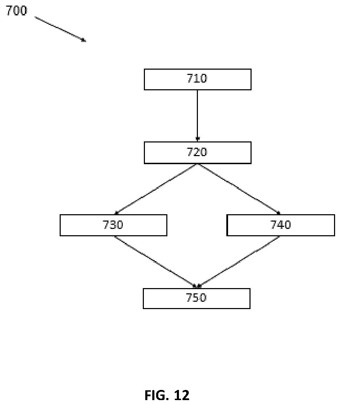

**Figur 12** zeigt ein Verfahren 700 zur Herstellung eines Antiresonanzelementvorformlings 100. In einer ersten Ausführungsform umfasst das Verfahren 700 die Verfahrensschritte 710, 720, 730 und 740. In einer zweiten Ausführungsform umfasst das Verfahren 700 die Verfahrensschritte 710, 720, 740 und 750.
Verfahrensschritt 710 umfasst ein Bereitstellen eines in axialer Aufsicht kreisförmigen ersten Kreiselements 200 und Verfahrensschritt 720 ein Bereitstellen eines in axialer Aufsicht kreisbogenförmigen ersten Kreisbogenelements 300, 300a, 300g.

Das erste Kreiselement 200 und das erste Kreisbogenelement 300, 300a, 300g können unterschiedlich zueinander angeordnet werden.
In der ersten Ausführungsform des Verfahrens 700 werden in einem Verfahrensschritt 730 das erste Kreisbogenelement 300, 300a und das erste Kreiselement 200 derart zueinander angeordnet, dass das erste Kreisbogenelement 300, 300a mit einem ersten Kreisbogenende und einem dem ersten Kreisbogenende entgegengesetztem zweiten Kreisbogenende an einer Innenseite des ersten Kreiselements 200 angeordnet sind. Das erste Kreisbogenelement 300, 300a ist somit innerhalb des ersten Kreiselements 200 angeordnet.
In der zweiten Ausführungsform des Verfahrens 700 werden in einem Verfahrensschritt 740 das erste Kreisbogenelement 300g und das erste Kreiselement 200 derart zueinander angeordnet, dass das erste Kreisbogenelement mit dem ersten Kreisbogenende und dem zweiten Kreisbogenende an einer Außenseite des ersten Kreiselements 200 angeordnet sind. Das erste Kreisbogenelement 300g ist somit außerhalb des ersten Kreiselements 200 angeordnet.
In einem Verfahrensschritt 750 wird das erste Kreisbogenende und das zweite Kreisbogenende, und somit das erste Kreisbogenelement 300, 300a, 300g, mit dem ersten Kreiselement 200 verbunden. Das Verbinden in Verfahrensschritt 750 kann auf unterschiedliche Weise realisiert werden, beispielsweise über Kleben, Klemmen oder über ein Befestigungsmittel, wie beispielsweise über eine Schraube, eine Niete oder über einen Nagel. In einer bevorzugten Ausführungsform findet das Verbinden in Verfahrensschritt 750 mittels eines Wärmeeintrags statt.

Der Wärmeeintrag dient insbesondere zum stoffschlüssigen Verbinden von erstem Kreiselement 200 und erstem Kreisbogenelement 300, 300a, 300g an den Kontaktstellen 400, 400a, 400g der beiden Elemente. Der Wärmeeintrag erfolgt derart, dass eine stoffschlüssige Verbindung zwischen den Materialien der beiden Elemente möglich ist. Dies kann erreicht werden, indem die Oberflächen der Elemente zumindest an den Kontaktstellen 400, 400a, 400g zumindest partiell aus dem festen Zustand in den flüssigen, insbesondere zähflüssigen, Zustand wechseln.

Der Wärmeeintrag kann auf unterschiedliche Weise realisiert werden, beispielsweise durch:
- Flammenbasierte Prozesse: basieren auf der Oxidation eines exotherm reagierenden Gases. Ein Beispiel ist die Nutzung von Wasserstoff - auch als "H2" bezeichnet - als Brenngas (die Flammenhydrolyse). Wasserstoff reagiert dabei mit dem Sauerstoff - auch als "O2" bezeichnet - in der Luft; oder
- Flammenfreie Prozesse: nutzen andere sich erwärmende Systeme, die keine offenen Flamme benötigen. Ein Beispiel ist die Nutzung eines Widerstands, der elektrische Energie in thermische Energie (Wärme) umzuwandeln.

### Bezugszeichen

- 100, 100a, 100b, 100c,:
- 100d, 100e, 100f, 100g, 100h: Antiresonanzelementvorformling
- 100': Antiresonanzelement
- 150, 150a, 150g: Außenwinkel

- 200: erstes Kreiselement
- 200': erste Kreisstruktur
- 210, 210h: zweites Kreiselement
- 250: erster Kreisradius
- 260, 260h: zweiter Kreiselementradius

- 300, 300a, 300g: erstes Kreisbogenelement
- 300': erste Kreisbogenstruktur
- 310, 310c, 310d: zweites Kreisbogenelement
- 330, 330c, 330d: Kontaktstelle erstes Kreiselement und zweites Kreisbogenelement
- 350, 350a, 350g: erster Kreisbogenradius
- 360, 360c, 360d: zweiter Kreisbogenradius
- 400, 400a, 400g: Kontaktstelle erstes Kreiselement und erstes Kreisbogenelement
- 400': Kontaktstelle erste Kreisstruktur und erste Kreisbogenstruktur

- 500: Vorform
- 510: Mittelpunkt der Vorform
- 550: Hüllrohr
- 550': Mantelbereich

- 600: Antiresonante Hohlkernfaser
- 610: Mittelpunkt der antiresonanten Hohlkernfaser

- 700: Verfahren
- 710: Bereitstellen eines ersten Kreiselement
- 720: Bereitstellen eines ersten Kreisbogenelements
- 730: Anordnen des ersten Kreisbogenelements innerhalb des ersten Kreiselements
- 740: Anordnen des ersten Kreisbogenelements außerhalb des ersten Kreiselements
- 750: Verbinden

## Patentansprüche

1. Antiresonanzelementvorformling (100, 100a, 100b, 100c, 100d, 100e, 100f, 100g, 100h) zur Herstellung einer antiresonanten Hohlkernfaser (600), in einer axialen Aufsicht umfassend
ein kreisförmiges erstes Kreiselement (200) mit einem ersten Kreisradius (250) und ein kreisbogenförmiges erstes Kreisbogenelement (300, 300a, 300g) mit einem ersten Kreisbogenradius (350, 350a, 350g),
**dadurch gekennzeichnet, dass**
das erste Kreiselement (200) und das erste Kreisbogenelement (300, 300a, 300g) an zwei Kontaktstellen (400, 400a, 400g) miteinander verbunden sind.

2. Antiresonanzelementvorformling (100, 100a, 100b, 100c, 100d, 100e, 100f, 100g, 100h) nach Anspruch 1, **dadurch gekennzeichnet, dass das** erste Kreiselement (200) und das erste Kreisbogenelement (300, 300a, 300g) ein Glas, insbesondere Quarzglas, oder ein Polymer umfassen, insbesondere aus einem Glas, insbesondere Quarzglas, oder einem Polymer bestehen.

3. Antiresonanzelementvorformling (100, 100a, 100b, 100c, 100d, 100e, 100f, 100g, 100h) nach Anspruch 1 oder 2, **dadurch gekennzeichnet, dass** der Antiresonanzelementvorformling (100, 100a, 100b, 100c, 100d, 100e, 100f, 100g, 100h) ein kreisförmiges zweites Kreiselement (210) mit einem zweiten Kreisradius (260) umfasst.

4. Antiresonanzelementvorformling (100, 100a, 100b, 100c, 100d, 100e, 100f, 100g, 100h) nach einem der vorhergehenden Ansprüche, **dadurch gekennzeichnet, dass** der Antiresonanzelementvorformling (100, 100a, 100b, 100c, 100d, 100e, 100f, 100g, 100h) ein kreisbogenförmiges zweites Kreisbogenelement (310) mit einem zweiten Kreisbogenradius (360) umfasst.

5. Antiresonanzelementvorformling (100, 100a, 100b, 100c, 100d, 100e, 100f, 100g, 100h) nach einem der vorhergehenden Ansprüche, **dadurch gekennzeichnet, dass** der erste Kreisradius (250) einen kleineren Betrag als der erste Kreisbogenradius (350, 350a, 350g) aufweist.

6. Antiresonanzelementvorformling (100, 100a, 100b, 100c, 100d, 100e, 100f, 100g, 100h) nach einem der vorhergehenden Ansprüche, **dadurch gekennzeichnet, dass** das erste Kreisbogenelement (300, 300a) innerhalb des ersten Kreiselements (200) angeordnet ist.

7. Antiresonanzelementvorformling (100, 100a, 100b, 100c, 100d, 100e, 100f, 100g, 100h) nach einem der Ansprüche 1 bis 5, **dadurch gekennzeichnet, dass** das erste Kreisbogenelement (300g) außerhalb des ersten Kreiselements (200) angeordnet ist.

8. Verfahren (700) zur Herstellung eines Antiresonanzelementvorformlings (100, 100a, 100b, 100c, 100d, 100e, 100f, 100g, 100h) nach einem der Ansprüche 1 bis 7, **umfassend die Verfahrensschritte**
(a) Bereitstellen (710) eines in axialer Aufsicht kreisförmigen ersten Kreiselements (200);
(b) Bereitstellen (720) eines in axialer Aufsicht kreisbogenförmigen ersten Kreisbogenelements (300, 300a, 300g);
(c1) Anordnen (730) des ersten Kreisbogenelements (300, 300a) innerhalb des ersten Kreiselements (200), so dass ein erstes Kreisbogenende und ein zweites Kreisbogenende an einer Innenseite des ersten Kreiselements (200) angeordnet sind;
oder
(c2) Anordnen (740) des ersten Kreisbogenelements (300g) außerhalb des ersten Kreiselements (200), so dass ein erste Kreisbogenende und ein zweites Kreisbogenende an einer Außenseite des ersten Kreiselements (200) angeordnet sind;
(d) Verbinden (750) des ersten Kreisbogenendes und des zweiten Kreisbogenendes mit dem ersten Kreiselement (200) unter Ausbildung zweiter Kontaktstellen (400, 400a, 400g).

9. Verfahren (700) nach Anspruch 8, **dadurch gekennzeichnet, dass** das Verbinden (750) in Verfahrensschritt (d) durch einen Wärmeeintrag erfolgt.

10. Vorform (500) zur Herstellung einer antiresonanten Hohlkernfaser (600) umfassend ein Hüllrohr (550), **dadurch gekennzeichnet, dass** in dem Hüllrohr (550) zumindest ein Antiresonanzelementvorformling (100, 100a, 100b, 100c, 100d, 100e, 100f, 100g, 100h) nach einem der Ansprüche 1 bis 7 angeordnet ist.

11. Vorform (500) zur Herstellung einer antiresonanten Hohlkernfaser (600) nach Anspruch 10, **dadurch gekennzeichnet, dass** der zumindest eine Antiresonanzelementvorformling (100, 100a, 100b, 100c, 100d, 100e, 100f, 100g, 100h) mit einer Innenfläche des Hüllrohrs (550) verbunden ist.

12. Vorform (500) zur Herstellung einer antiresonanten Hohlkernfaser nach Anspruch 10 oder 11, **dadurch gekennzeichnet, dass** in dem Hüllrohr (550) 3 bis 10 Antiresonanzelementvorformlinge (100, 100a, 100b, 100c, 100d, 100e, 100f, 100g, 100h) angeordnet sind.

13. Antiresonante Hohlkernfaser (600), in axialer Aufsicht umfassend einen Mantelbereich (550') und zumindest ein in dem Mantelbereich (550') angeordnetes Antiresonanzelement (100') umfassend eine kreisförmige erste Kreisstruktur (200') mit einem ersten Kreisstrukturradius und eine kreisbogenförmige erste Kreisbogenstruktur (300') mit einem ersten Kreisbogenstrukturradius,
**dadurch gekennzeichnet, dass**
die erste Kreisstruktur (200') und die erste Kreisbogenstruktur (300') an zwei Kontaktstellen (400') miteinander verbunden sind.

14. Antiresonante Hohlkernfaser (600) nach Anspruch 13 hergestellt durch Ausziehen einer Vorform (500) nach einem der Ansprüche 10 bis 12.
